# EUROPEAN PATENT SPECIFICATION

(11) **EP 3 350 791 B1**
(45) Date of publication and mention of the grant of the patent: **16.12.2020**
(21) Application number: 16847142.3
(22) Date of filing: 13.09.2016
(51) Int. Cl.: H04W 12/06, H04L 29/06, G07C 9/00, H04W 4/40, H04W 4/44, H04W 4/70, H04W 4/80

(54) **VEHICLE BASED TRAINABLE TRANSCEIVER AND AUTHENTICATION OF USER**
FAHRZEUGBASIERTER TRAINIERBARER SENDER-EMPFÄNGER UND AUTHENTIFIZIERUNG EINES BENUTZERS
ÉMETTEUR-RÉCEPTEUR EMBARQUÉ POUVANT SUBIR UN APPRENTISSAGE, ET AUTHENTIFICATION D'UTILISATEUR

(30) Priority: 14.09.2015 US 201562218225 P
(43) Date of publication of application: 25.07.2018
(73) Proprietor: GENTEX CORPORATION, Zeeland, Michigan 49464 (US)
(72) Inventor: PAPAY, Douglas C., Zeeland, Michigan 49464 (US)
(74) Representative: Müller-Boré & Partner Patentanwälte PartG mbB
(86) International application number: PCT/US2016/051535
(87) International publication number: WO 2017/048721

(56) References cited:
- WO-A1-2008/079811
- WO-A2-2014/210491
- US-A1- 2005 024 184
- US-A1- 2005 024 230
- US-A1- 2005 024 230
- US-A1- 2007 076 645
- US-A1- 2008 061 926
- US-A1- 2010 144 284
- US-A1- 2015 228 132

## Description

### FIELD

The present invention relates generally to the field of vehicles, and more particularly to the use of a trainable transceiver (e.g., garage door opener) in vehicles.

### BACKGROUND

A vehicle may include a trainable transceiver for operating, for example, a garage door, security gate, home lighting system, or home security system. A trainable transceiver may be usable in the vehicle regardless of whether the vehicle ignition is activated. This may create a security risk where access to the house can be gained by an unauthorized user by simply pushing a single trainable transceiver button (i.e., if the vehicle is parked in a driveway). Such a security risk may be a deterrent to use of battery powered trainable transceivers in a vehicle.

US 2010/144284 A1 relates to a system for mounting in a vehicle and for providing a control signal to a remote device based on information stored in a portable electronic device. The system includes a radio frequency transmitter for transmitting a control signal to the remote device. The system also includes a first circuit configured to receive first information from the portable electronic device via inductive-coupling between the portable electronic device and the first circuit when the portable electronic device is brought within the induction field of the first circuit. The system also includes a second circuit configured to use the first information received from the portable electronic device and to at least one of format the control signal in accordance with the first information and to cause the radio frequency transmitter to format the control signal in accordance with the first information.

US 2015/228132 A1 relates to a trainable transceiver base station for controlling a remote device. The trainable transceiver includes a first transceiver circuit, a power connection, and a control circuit. The first transceiver circuit is configured to transmit activation signals to the remote device, the activation signals formatted based on training information and formatted to control the remote device. The power connection is configured to receive electrical power from a vehicle. The control circuit is configured to cause the first transceiver circuit to transmit the activation signal when a command signal is received at the trainable transceiver base station. The trainable transceiver base station is located at a first location within the vehicle, and the trainable transceiver base station is configured to receive the command signal from a remote button module located at a second location within the vehicle.

US 2005/024230 A1 relates to a universal in-vehicle remote control that automatically assists in appliance activation configuration. The appliance responds to a radio frequency activation signal having characteristics represented by one of a plurality of activation schemes. The user is automatically prompted to select one of a plurality of subsets of possible activation schemes. For each activation scheme in the subset, an activation signal is transmitted. User input is received indicating whether or not at least one transmitted activation signal successfully activates the appliance. If the user input indicates success, data representing the activation scheme is associated with a user activation input channel.

WO 2008/079811 A1 relates to a system and method for controlling a remotely operated device, the remotely operated device controllable by an original transmitter. The system includes a processing circuit configured to receive information based on a first control signal transmitted by the original transmitter. The processing circuit is configured to automatically learn information relating to the first control signal to generate a second control signal. The second control signal is configured to control the remotely operated device based on the information received from the original transmitter. The system also includes a transmitter circuit in communication with the processing circuit. The transmitter circuit is configured to transmit the second control signal to the remotely operated device.

US 2007/076645 A1 relates to a signal repeater system in a repeater unit having a repeater receiver, a repeater transmitter, a controller, a power source, and an optional network interface. The repeater unit performs an authentication of security codes contained in the received communication signals. If validly authenticated, the repeater unit retransmits the communication signals to a barrier operator. The transmitted communication signals may also contain predetermined functions that allow a remote transmitter to actuate an access barrier, such as a garage door opener, via the barrier operator. As such, the repeater system extends the effective range of the remote transmitter, allowing a user to actuate the barrier operator from a greater range. An optional network interface provided by the repeater unit, allows the repeater unit to be connected to any computer network.

Thus, according to an aspect, the problem relates to how to increase the security of a transceiver for operating remote devices.

### SUMMARY

This problem is solved by the subject-matter of the independent claims. Preferred embodiments are defined in the dependent claims. Further, the present disclosure relates to a transmitter device. The transmitter device includes a user interface and a processing circuit. The user interface is configured to receive a first input associated with initiation of a training process, and a second input of a selection of a transmitting channel. The processing circuit is communicatively coupled to the user interface and includes a non-transitory computer-readable storage medium. The processing circuit is configured to wait for the second input, receive, via the user interface, the second input, store, in the non-transitory computer-readable storage medium, a plurality of characteristics of the selection of the transmitting channel and associate the characteristics with the selection of the transmitting channel, pair the selection of the transmitting channel with a portable electronic device, and associate the portable electronic device with the selection of the transmitting channel.

Further, the present disclosure relates to a transmitter device for mounting to a vehicle and for sending a transmission to a remote system, including a processing circuit which further includes a transceiver for sending a transmission to a remote system and receiving input transmissions, an authenticator, non-transitory computer-readable storage media with computer-executable instructions embodied thereon, and a transceiver capable of short range wireless communication with a user's portable electronic device and searching for unassociated portable electronic devices for the purpose of association, or previously authenticated portable electronic devices. The transmitter device also includes a user interface element and a power source, which may be an internal battery or an external source such as a vehicle battery, for the processing circuit and user interface element. The processing circuit causes the transmitter to send the transmission to the remote system upon determining whether the authenticated device is associated with the user selected transmitter input.

Further, the present disclosure relates to a system for authenticating a user prior to allowing the user to interact with a transmitter device for mounting to a vehicle and for sending a transmission to a remote system which includes a user's portable electronic device and the transmitter device. The transmitter device responds to at least one of: receiving input from a user interface element associated with the transmitter device, receiving input from a motion sensor, receiving input from a light sensor, or detecting that a predetermined period of time has passed. The transmitter device includes a processing circuit which stores transmission details of the input received, which further includes a transceiver for sending a transmission to a remote system and receiving input transmissions, an authenticator, non-transitory computer-readable storage media with computer-executable instructions embodied thereon, and a transceiver capable of short range wireless communication with a user's portable electronic device and searching for previously authenticated portable electronic devices. The transmitter device further includes user interface elements and a power source, which may be an internal battery or an external source such as a vehicle battery, for the processing circuit and user interface elements, wherein the processing circuit is configured to cause the transmitter to send the transmission to the remote system upon determining that the authenticated device is associated with the user selected transmitter input. This secondary form of authentication allows for enhanced security and an expanded set of features and commands for the user to choose from.

Further, the present disclosure relates to a method. The method includes receiving, at a user interface, an input associated with initiation of a training process. The method includes waiting, by a processing circuit communicatively coupled to the user interface, for user input of a selection of a transmitting channel at the user interface. The method includes receiving, at the user interface, the selection. The method includes storing, in a non-transitory computer-readable storage medium, a plurality of characteristics of the selection and associating the characteristics with the selection. The method includes pairing, by a processing circuit, a portable electronic device with the selection. The method includes storing, in the non-transitory computer-readable storage medium, the portable electronic device and associating the portable electronic device with the selection.

Further, the present disclosure relates to a method. The method includes receiving, at a user interface, an input associated with initiation of a training process. The method includes waiting, by a processing circuit communicatively coupled to the user interface, for user input of a selection. The method includes receiving, at the user interface, the selection, the selection being a command to clear all associations of devices with a transmitter device. The method includes clearing, by the processing circuit, all associations stored within a non-transitory computer-readable medium associated with the transmitter device.

Further, the present disclosure relates to a system. The system includes a user interface and a processing circuit communicatively coupled to the user interface. The user interface is configured to receive a first input associated with initiation of a training process and a second input of a selection of a command to clear all associations of devices with a transmitter device. The processing circuit is configured to wait for the second input and clear all associations stored within a non-transitory computer-readable storage medium associated with the transmitter device in response to receiving the second input.

### BRIEF DESCRIPTION OF THE DRAWINGS

FIG. 1 is a perspective view of a vehicle having a trainable transceiver for operating a garage door after authenticating user.
FIG. 2A is a schematic diagram of an exemplary trainable transceiver and the external devices with which the trainable transceiver can communicate according to an exemplary embodiment.
FIG. 2B is a schematic diagram of an exemplary trainable transceiver and the external devices with which the trainable transceiver can communicate according to another exemplary embodiment.
FIG. 2C is a schematic diagram of an exemplary trainable transceiver and the external devices with which the trainable transceiver can communicate according to yet another exemplary embodiment.
FIG. 2D is a schematic diagram of an exemplary trainable transceiver and the external devices with which the trainable transceiver can communicate according to yet another exemplary embodiment.
FIG. 3A is a detailed block diagram of an exemplary trainable transceiver according to an exemplary embodiment.
FIG. 3B is a detailed block diagram of an exemplary trainable transceiver according to another exemplary embodiment.
FIG. 3C is a detailed block diagram of an exemplary trainable transceiver according to yet another exemplary embodiment.
FIG. 4 is a flow chart of an exemplary method of controlling a remote system using a trainable transceiver for mounting to a vehicle and for sending a transmission to a remote system according to an exemplary embodiment.
FIG. 5 is a flow chart of an exemplary method of training a trainable transceiver for mounting to a vehicle and for sending a transmission to a remote system according to an exemplary embodiment.
FIG. 6A is a flow chart of an exemplary method of training a trainable transceiver for mounting to a vehicle and for sending a transmission to a remote system when at least one device has been previously authenticated according to an exemplary embodiment.
FIG. 6B is a flow chart of an exemplary method of training a trainable transceiver for mounting to a vehicle and for sending a transmission to a remote system when at least one device has been previously authenticated according to another exemplary embodiment.

### DETAILED DESCRIPTION

Referring generally to the FIGURES, methods are shown and described for allowing a trainable transceiver for mounting to a vehicle and for sending a transmission to a remote system to actuate only in the event of some additional factor of authentication. In cases where the device is battery powered, a direct line of power/trigger may not be connected to the vehicle ignition or wired to another vehicle part. This may particularly be the case for a retrofit device. In some embodiments, the device is directly connected to vehicle, or is somehow externally powered. This disclosure adds a layer of security. When a button is pressed on the trainable transceiver (e.g., to open a garage door), the trainable transceiver only conducts the transmission of a signal to the remote system (e.g., garage door opener) if an additional authentication parameter is detected. One embodiment of this authentication parameter is a mobile phone, smart watch, or another portable electronic device carried by a user which can be used to trigger authentication of the trainable transceiver via wireless (e.g., Bluetooth, WiFi, NFC, etc.) communications. The training process and selection of a transmitting channel, as well as the operation of the trainable transceiver once the training process has been completed, is further described in the following paragraphs.

For the next few paragraphs, general operation of a trainable transceiver for mounting to a vehicle and for sending a transmission to a remote system will be described. The trainable transceiver may be configured to "learn" the characteristics of multiple remote control signals generated by multiple remote control devices (e.g., a remote control for a garage door, a security gate, a home lighting system, a home security system, etc.) and store an indication of the multiple remote control signals in a local memory for subsequent retransmission. The trainable transceiver may reproduce a stored control signal upon receiving a user input (e.g., via a push button, a voice command, etc.) and may transmit the stored control signal for operating a remote electronic system or device.

The trainable transceiver may be integrated within a vehicle system component such as a rear view mirror, an instrument panel, a headliner, or other locations within the vehicle. The trainable transceiver may be installed quickly and easily into an existing vehicle (e.g., as part of a vehicle upgrade or retrofit) without requiring extensive modification to the existing vehicle system component. For example, the trainable transceiver may be a standalone device capable of independent and self-sufficient operation without relying on input from a vehicle subsystem or energy from the main vehicle battery. The trainable transceiver may include all the necessary processing electronics for learning, storing, and retransmitting a control signal. The trainable transceiver may further include a battery (e.g., separate from the main vehicle battery) used to power only the trainable transceiver.

In some embodiments, the trainable transceiver is integrated with a rear view mirror assembly for the vehicle. For example, the trainable transceiver may include a battery and a transceiver circuit mounted between a front reflective surface (e.g., the mirror) and a back housing of the rear view mirror assembly. The trainable transceiver may include one or more user input devices for controlling collection and retransmission of a remote control signal.

The trainable transceiver authentication system includes an authentication module. In some embodiments, the authentication module is a hardware component. In other embodiments, the authentication module is a software component. In some embodiments, the authentication module is a combination of both hardware and software. The authentication module may generate an authentication control signal in order to restrict operation of the trainable transceiver. The authentication module may generate the authentication control signal based on an authentication input signal received from some other component, e.g., from an adjacent authenticator fob, from a vibration sensor, from an ignition line power detector, etc. With use of the authentication module, the trainable transceiver will restrict operation of the device to authorized users. This may prevent security vulnerabilities that would otherwise be present if the authentication module were not used.

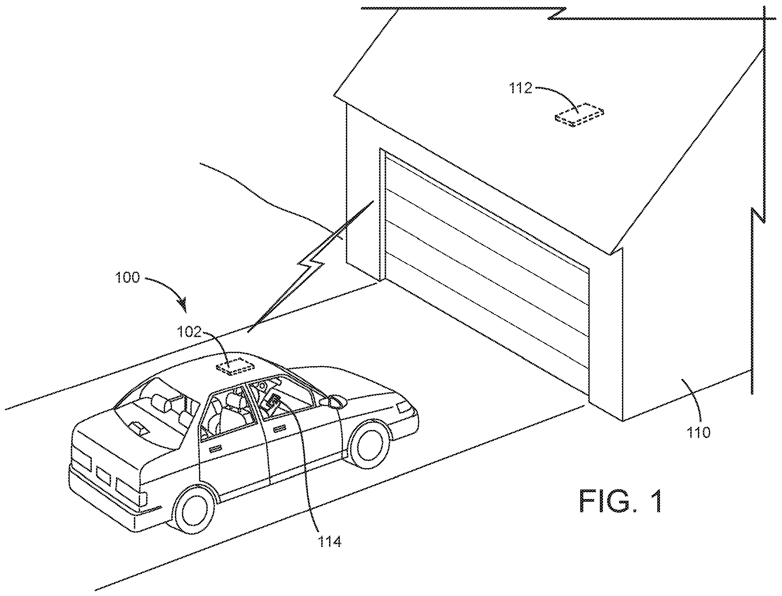

Referring now to FIG. 1, a perspective view of a vehicle 100 having a trainable transceiver 102 for operating the door of a garage 110 after authenticating a user is shown, according to an exemplary embodiment. Vehicle 100 may be an automobile, truck, sport utility vehicle (SUV), mini-van, or other vehicle. In some embodiments, trainable transceiver 102 may be integrated with a mirror assembly (e.g., a rear view mirror assembly) of vehicle 100. In other embodiments, trainable transceiver 102 may be mounted to other vehicle interior elements, such as a vehicle headliner, a center stack, a visor, an instrument panel, or other control unit within vehicle 100.

Trainable transceiver 102 may be configured for quick and easy installation into vehicle 100. For example, for embodiments in which trainable transceiver 102 is integrated with a rear view mirror assembly, installation may require only swapping an existing rear view mirror assembly for the integrated rear view mirror display and trainable transceiver assembly. Trainable transceiver 102 may include all the electronic components for self-sufficient operation (e.g., a control circuit, a transceiver circuit, a battery, etc.) without requiring a wired power or data connection to another vehicle system component. In some embodiments, trainable transceiver may be wired to vehicle 100.

Trainable transceiver 102 is configured to communicate with a remote electronic system 112 of a garage 110 or other structure. In some embodiments, remote electronic system 112 is configured to control operation of a garage door attached to garage 110. In other embodiments, remote electronic system 112 may be a home lighting system, a home security system, a data network (e.g., LAN, WAN, cellular, etc.), a heating, ventilating, and air conditioning (HVAC) system, or any other remote electronic system capable of receiving control signals from trainable transceiver 102. According to an exemplary embodiment, the trainable transceiver 102 is configured to use a secondary authentication method, described in subsequent figures, prior to executing commands received.

Wireless device 114 is a user-owned portable electronic device, which in some embodiments is a Bluetooth-enabled device. In other embodiments, wireless device 114 and remote electronic system 112 may communicate using any suitable wireless standard (e.g., Bluetooth, Bluetooth Low Energy, WiFi, etc.) or other communications protocols compatible with or proprietary to remote electronic system 112. In one embodiment, the device is a smart phone. In other embodiments, the device may be a wireless fob, a laptop, a smart watch, etc. In some embodiments, wireless device 114 comprises a user interface with a display and user input devices. Wireless device 114 may be operated by the driver, a passenger, any occupant of vehicle 100, or any other user with permission from the vehicle owner.

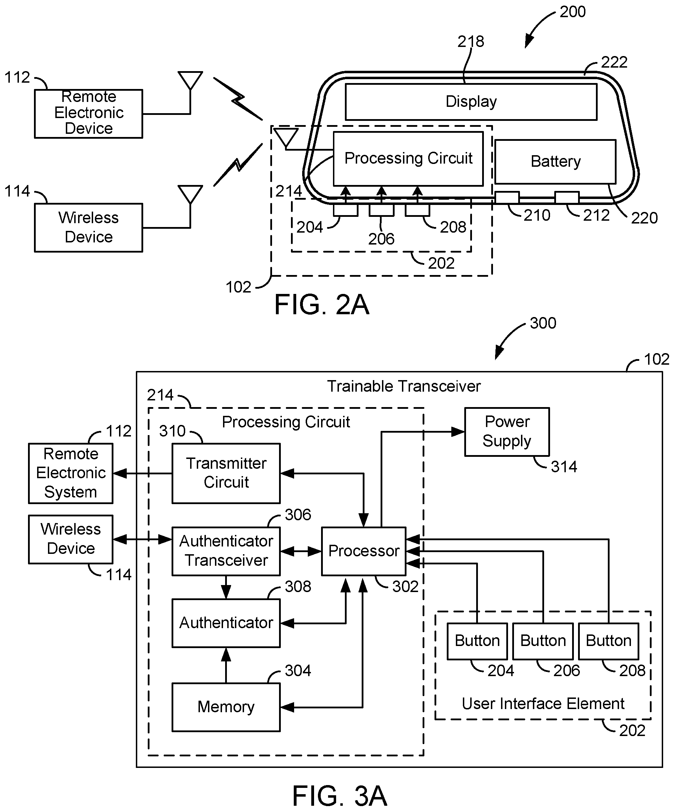

Now referring to FIG. 2A, schematic diagram 200 is shown to include several of the components of trainable transceiver 102. For example, schematic diagram 200 is shown to include processing circuit 214. Schematic diagram 200 is shown to further include several additional components including user interface element 202 comprising buttons 204, 206, and 208, display 218, and battery 220. Schematic diagram 200 illustrates the various components of trainable transceiver 102 within a housing 222. Housing 222 may be a perimeter frame, rear housing, or other boundary associated with a rear view mirror assembly. All components of trainable transceiver 102 may be located within or mounted upon housing 222. Schematic diagram 200 shows housing 222 containing light sensor 210 and motion sensor 212. Light sensor 210 and motion sensor 212 may be integrated with the rear view mirror assembly. In some embodiments, additional sensors may include at least one of: a vibration sensor, a noise sensor, a camera, etc. The data obtained from the sensors may, in some embodiments, be used to receive and respond to voice commands, gestures, etc. The operation of trainable transceiver 102 is dependent on the secondary authentication method carried out by processing circuit 214.

Still referring to FIG. 2A, schematic diagram 200 is shown to include user interface 202. User interface 202 may include a plurality of user input devices. Buttons 204-208 may be an embodiment of user interface elements 202. For example, buttons 204-208 may be user operable input devices for controlling operation of trainable transceiver 102. Each of buttons 204-208 may be associated with (e.g., trained, programmed, configured to operate, etc.) a different remote device controllable by trainable transceiver 102. For example, button 204 may be associated with a garage door system, button 206 may be associated with an access gate system, and button 208 may be associated with a home lighting system. Buttons 204-208 may include any number of buttons and may be configured to operate any number of remote electronic systems 112.

In some embodiments, each remote electronic system 112 controlled by trainable transceiver 102 requires a control signal having different signal characteristics (e.g., operating frequency, modulation scheme, security code, etc.). Each of buttons 204-208 may cause trainable transceiver 102 to emit a control signal having different signal characteristics (e.g., for controlling multiple remote electronic systems with a single device). The transmission of control signals to remote electronic system 112 is dependent on authentication of the user through the authentication method carried out by processing circuit 214.

Still referring to FIG. 2A, schematic diagram 200 is shown to include display 218. Display 218 may be integrated with a vehicle subsystem. In one embodiment, display 218 may be a part of the rear view mirror assembly. In other embodiments, display 218 may be a part of the center stack, the visor, or any other vehicle integrated component. In some embodiments, display 218 may include speakers for playing sound and feedback to user commands. Display 218 may be a single LED indicator. Display 218 may be a graphical display. In some embodiments, display 218 may be a touchscreen which accepts user input.

Still referring to FIG. 2A, schematic diagram 200 is shown to include battery 220. In some embodiments, battery 220 may be installed within a rear view mirror assembly of vehicle 100 (e.g., between the mirror and back housing). For implementations in which trainable transceiver unit 102 is integrated with a rear view mirror display, the integrated product may be sold and installed as a standalone unit. Locating battery 220 within the rear view mirror assembly allows trainable transceiver unit 102 to operate independently without requiring wiring connections to any other component of vehicle 100. This advantage facilitates installation of trainable transceiver unit 102 by eliminating the need to disassemble vehicle 100 to run power cables from a main vehicle power line to trainable transceiver unit 102. Any necessary power cables or other wiring connections may be contained entirely within the rear view mirror assembly. Battery 220 may be configured to be quickly and easily replaced without requiring substantial disassembly or rewiring. Battery 220 may be any type of power cell. In some embodiments, battery 220 may be a lithium-ion cell. Battery 220 may store energy chemically and/or electrically. In some embodiments, battery 220 includes a capacitive element configured to store electrical energy. In some embodiments, battery 220 may be a solar cell, a hydrogen fuel cell, or any other type of power source. It is understood that battery 220 is not limited to the examples given.

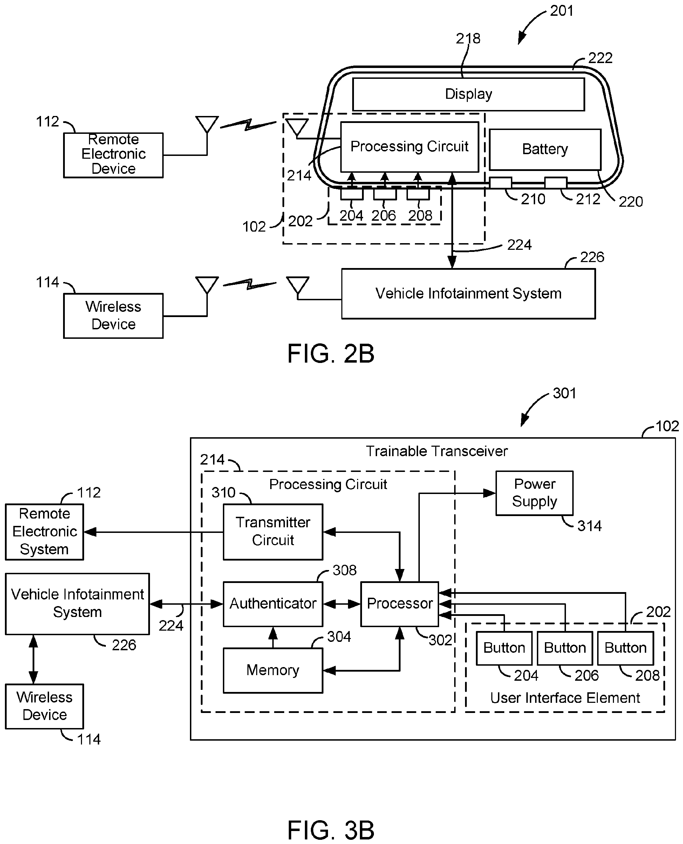

Now referring to FIG. 2B, schematic diagram 201 is shown to include many of the components of FIG. 2A. Schematic diagram 201 is another possible embodiment of the system of the present invention, and is shown to differ from schematic diagram 200 by the inclusion of vehicle data bus 224 and vehicle infotainment system 226. Wireless device 114 is shown, in one embodiment, to communicate with the vehicle infotainment system. Infotainment systems are generally found in the center stack of modern vehicles, and are capable of short range wireless communication. In some embodiments, infotainment systems are Bluetooth enabled. In one embodiment, processing circuit 214 communicates with vehicle infotainment system 226, which communicates with wireless device 114. In some embodiments, the communication with infotainment system 226 is through a wired connection, and trainable transceiver 102 is integrated with the vehicle. While FIGS. 2B and 3B illustrate the vehicle infotainment system 226, in various embodiments, the vehicle infotainment system can include, be part of, be substituted for, or have added various other vehicle wireless interfaces that may or may not include infotainment functions, such as a body control module or a wireless gateway.

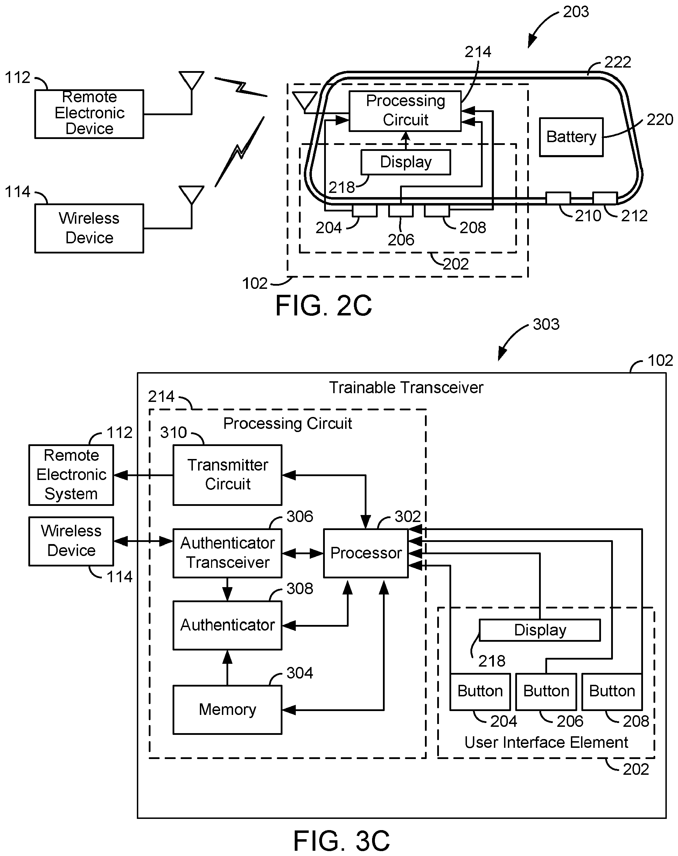

Now referring to FIG. 2C, schematic diagram 203 is shown to include many of the components of FIG. 2A. Schematic diagram 203 is another possible embodiment of the system of the present invention, and is shown to differ from schematic diagram 200 by the inclusion of display 218 within user interface elements 202. Display 218 may be a single LED indicator. Display 218 may be a graphical display. In some embodiments, display 218 may be a touchscreen which accepts user input. In some embodiments, display 218 may accept input from buttons 204-208.

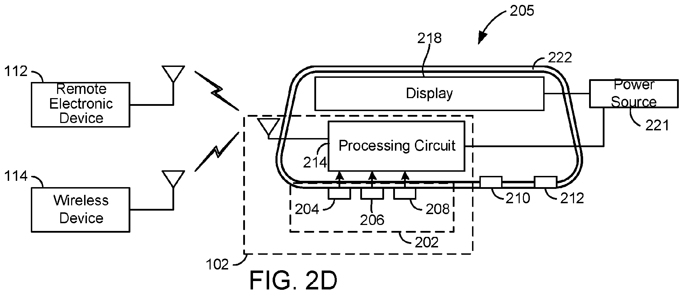

Now referring to FIG. 2D, schematic diagram 205 is shown to include many of the components of FIG. 2A. Schematic diagram 205 is another possible embodiment of the system of the present invention, and is shown to differ from schematic diagram 200 by the inclusion of a power source 221 in place of battery 220. In some embodiments, power source 221 is a vehicle battery and may be an embodiment of the battery of vehicle 100. In other embodiments, power source 221 is a power source external to trainable transceiver 102 and may be used to power trainable transceiver when the ignition of vehicle 100 has not been detected. Power source 221 may be any type of power cell or source, and may be, in some embodiments, a battery. Power source 221 may be a lithium-ion cell. Power source 221 may store energy chemically and/or electrically. In some embodiments, power source 221 includes a capacitive element configured to store electrical energy. In some embodiments, power source 221 may be a solar cell, a hydrogen fuel cell, or any other type of power source. It is understood that power source 221 is not limited to the examples given.

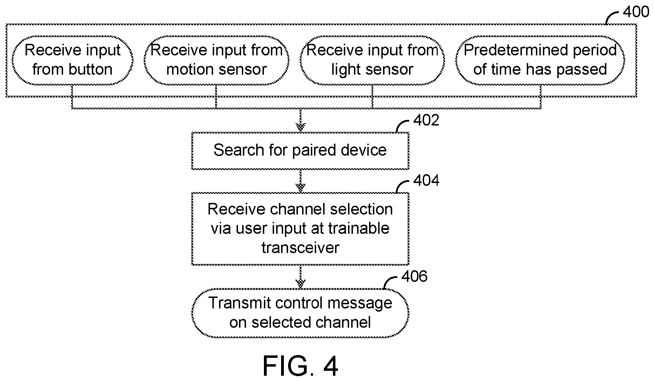

Referring now to FIG. 3A, a detailed block diagram of the trainable transceiver system 300 including a trainable transceiver 102, a remote electronic system 112, and a wireless device 114 is shown, according to an exemplary embodiment. In brief overview, trainable transceiver 102 is shown to include user interface elements 202 and processing circuit 214. Trainable transceiver 102 may communicate with remote electronic system 112 only after a training and authentication process, described in more detail with regards to FIG. 4, has been completed.

User interface elements 202 may facilitate communication between a user (e.g., driver, passenger, or other occupant of vehicle 100) and trainable transceiver 102. For example, user interface elements 202 may be used to receive input from a user.

In some embodiments, user interface elements 202 includes one or more push buttons, switches, dials, knobs, touch-sensitive user input devices (e.g., piezoelectric sensors, capacitive touch sensors, optical sensors, etc.), or other devices for translating a tactile input into an electronic data signal. In some embodiments, user interface elements 202 may be integrated with a rear view mirror assembly of vehicle 100. For example, user interface elements 202 are shown, in an exemplary embodiment, to comprise buttons 204, 206, and 208 may be one or more pushbuttons (e.g., mounted along a bottom surface of a rear view mirror assembly), as shown and described in greater detail in the following paragraphs. User interface elements 202 provide input signals to processing circuit 214 for controlling operation of trainable transceiver 102. In other embodiments, user interface elements 202 may include audio receivers, or other devices for translating non-tactile input into an electronic data signal.

Still referring to FIG. 3A, trainable transceiver 102 is shown to include a processing circuit 214. Processing circuit 214 may be configured to receive input from user input devices 204. Processing circuit 214 may further be configured to operate transmitter circuit 310 for conducting electronic data communications with remote electronic system 112. Processing circuit 214 carries out the secondary authentication process as well as the training process for trainable transceiver 102.

Still referring to FIG. 3A, trainable transceiver 102 is shown to include power supply 314. Power supply 314 can be similar or identical to battery 220. Power supply 314 can be a connection to vehicle power as described above. In some embodiments, processor 302 is configured to control operation of power supply 314.

Processing circuit 214 is shown to include a processor 302, memory 304, authenticator transceiver 306, authenticator 308, and transmitter circuit 310. Processor 302 may be implemented as a general purpose processor, a microprocessor, a processor, an application specific integrated circuit (ASIC), one or more field programmable gate arrays (FPGAs), a CPU, a GPU, a group of processing components, or other suitable electronic processing components.

Memory 304 is a non-transitory computer-readable storage medium. Memory 304 may include one or more devices (e.g., RAM, ROM, Flash memory, hard disk storage, etc.) for storing data and/or computer code for completing and/or facilitating the various processes, layers, and modules described in the present disclosure. Memory 304 may comprise volatile memory or non-volatile memory. Memory 304 may include database components, object code components, script components, or any other type of information structure for supporting the various activities and information structures described in the present disclosure. In some implementations, memory 304 is communicably connected to processor 302 via processing circuit 214 and includes computer code (e.g., data modules stored in memory 304) for executing one or more control processes described herein.

Authenticator transceiver 306 may be configured to communicate with a wireless device 114. Authenticator transceiver 306 may be configured to receive a control signal from wireless device 114 (e.g., during a training mode of operation), to identify one or more characteristics of the control signal (e.g., frequency, control data, modulation scheme, etc.), and to store the control signal characteristics in local memory 304 of trainable transceiver 102. Authenticator transceiver 306 may receive and store any number of control signal characteristics corresponding to any number of wireless devices 114.

In one embodiment, authenticator transceiver 306 is configured to listen for a signal from wireless device 114. Authenticator transceiver 306 may actively listen until a signal is received. Authenticator transceiver 306 may listen for a predetermined period of time in predetermined intervals of time.

In another embodiment, authenticator transceiver 306 is configured to receive an input from a light sensor 210 or motion sensor 212. The input received may initiate the training process or the process of executing a command.

In one embodiment, authenticator transceiver 306 is configured to broadcast an invitation and receive an acceptance of the invitation from wireless device 114. Authenticator transceiver 306 may be actively broadcasting until an acceptance is received. Authenticator transceiver 306 may broadcast an invitation at predetermined intervals of time, or invitations for a predetermined period of time.

Authenticator transceiver 306 may be configured to receive an input from button 304 and translate the input to authenticator 308, which may parse the content received, determine whether the user's device is authenticated, and communicate the determination to processor 302, which may operate display 218 and/or transmitter 310 in response to the input.

Transmitter circuit 310 may include transmit and/or receive circuitry configured to communicate with remote electronic system 112. Transmitter circuit 310 may be configured to transmit wireless control signals having control data for controlling remote electronic system 112. Transmitter circuit 310 may be further configured to receive wireless status signals including status information from remote electronic system 112. Trainable transceiver 102 and remote electronic system 112 may communicate using any suitable wireless standard, (e.g., Bluetooth, Bluetooth Low Energy, WiFi, etc.) or other communications protocols compatible with or proprietary to remote electronic system 112. Trainable transceiver 102 may be configured to learn and replicate control signals using any wireless communications protocol.

In a training mode of operation, transmitter circuit 310 may be configured to receive one or more characteristics of an activation signal sent from an original transmitter for use with remote electronic system 112. An original transmitter may be a remote or hand-held transmitter, which may be sold with remote electronic system 112 or as an after-market item. The original transmitter may be configured to transmit an activation signal at a predetermined carrier frequency and having control data configured to actuate remote electronic system 112. For example, the original transmitter may be a hand-held garage door opener transmitter configured to transmit a garage door opener signal at a frequency (e.g., centered around 315 MHz or 390 MHz, etc.). The activation signal may include control data, which can be a fixed code, a rolling code, or another cryptographically-encoded code. Remote electronic system 112 may be configured to open a garage door, for example, in response to receiving the activation signal from the original transmitter.

Trainable transceiver 102 may be configured to identify and store one or more characteristics of the activation signal (e.g., signal frequency, control data, modulation scheme, etc.) from the original transmitter or from another source. In some embodiments, transmitter circuit 102 is configured to learn at least one characteristic of the activation signal by receiving the activation signal, determining the frequency of the activation signal, and/or demodulating the control data from the activation signal. Alternatively, trainable transceiver 102 can receive one or more characteristics of the activation signal by other methods of learning. For example, the one or more characteristics of the activation signal can be preprogrammed into memory 304 during manufacture of trainable transceiver 102, input via user interface elements 202, or learned via a "guess and test" method. In this manner, trainable transceiver 102 need not actually receive the activation signal from an original transmitter in order to identify characteristics of the activation signal. Trainable transceiver 102 may store the characteristics of the activation signal in memory 304.

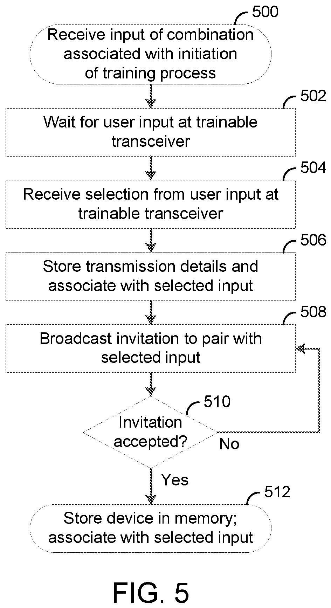

The training process for trainable transceiver 102 may include receiving an input associated with the initiation of the training process, receiving a transmitting channel selection, storing characteristics of the selection, pairing a user's wireless device 114 with trainable transceiver 102, and associating wireless device 114 with the selection. An embodiment of the process is described in further detail with regards to FIGS. 5-6.

In some embodiments, trainable transceiver 102 is configured to integrate the original transmitter as part of the wireless control system. For example, operation of the original transmitter within range of trainable transceiver 102 may provide an activation signal to processing circuit 214, indicating that the signal was also sent to remote electronic system 112. In some embodiments, trainable transceiver 102 eliminates the need for continued use of the original transmitter after training is complete.

Transmitter circuit 310 may be configured to generate a carrier frequency at any of a number of frequencies (e.g., in response to a control signal from processing circuit 214). In some embodiments, the frequencies generated can be in the ultra-high frequency range. In other embodiments, the frequencies generated can be in the high or very high frequency ranges. It is contemplated that transmitter circuit 310 may be configured to generate a carrier frequency at any frequency which may be used for communication or data transferal. The control data modulated with the carrier frequency signal may be frequency shift key (FSK) modulated, amplitude shift key (ASK) modulated, or modulated using another modulation technique. Transmitter circuit 310 may be configured to generate a wireless control signal having a fixed code, a rolling code, or other cryptographically encoded control code suitable for use with remote electronic system 112.

Transmitter circuit 310 may be configured to reproduce the control signal in response to an input received from processor 302. For example, in response to a first input received from processor 302 (e.g., caused by a user pressing button 302), transmitter circuit 310 may reproduce and transmit a first control signal via an antenna. In response to a second input received from processor 302 (e.g., caused by a user pressing button 304), transmitter circuit 310 may reproduce and transmit a second control signal via an antenna. In response to a third input received from processor 302 (e.g., caused by a user pressing button 306), transmitter circuit 310 may reproduce and transmit a third control signal via an antenna. Transmitter circuit 310 may be capable of reproducing any number of control signals for operating any number of remote electronic systems 112.

Still referring to FIG. 3A, system 300 is shown to include a remote electronic system 112. Remote electronic system 112 may be any of a plurality of remote electronic systems, such as a garage door opener (as shown in FIG. 1), security gate control system, security lights, remote lighting fixtures or appliances, a home security system, or another set of remote devices. Remote electronic system 112 may be configured to receive signals from trainable transceiver 102 which may include control data for controlling operation of remote electronic system 112.

Referring now to FIG. 3B, detailed block diagram 301 is shown to include many of the components of FIG. 3A. Schematic diagram 301 is another possible embodiment of the system of the present invention, and is shown to differ from detailed block diagram 300 by the inclusion of vehicle data bus 224 and vehicle infotainment system 226. The vehicle data bus 224 can be or include a local interconnect network ("LIN") bus, a controller area network ("CAN") bus, or a communication bus provided a serial connection from vehicle infotainment system 226 to trainable transceiver 102. Wireless device 114 is shown, in one embodiment, to communicate with the vehicle infotainment system. Infotainment systems are generally found in the center stack of modern vehicles, and are capable of short range wireless communication. In some embodiments, infotainment systems are Bluetooth enabled. In one embodiment, processing circuit 214 communicates with vehicle infotainment system 226, which communicates with wireless device 114. In some embodiments, the communication with infotainment system 226 is through a wired connection, and trainable transceiver 102 is integrated with the vehicle.

Still referring to FIG. 3B, trainable transceiver 102 is shown to include a processing circuit 214. Processing circuit 214 may be configured to receive input from user input devices 204. Processing circuit 214 may further be configured to operate transmitter circuit 310 for conducting electronic data communications with remote electronic system 112. Processing circuit 214 carries out the secondary authentication process as well as the training process for trainable transceiver 102. Processing circuit 214 is shown to include a processor 302, memory 304, authenticator 308, and transmitter circuit 310. The connection through vehicle data bus 224 to vehicle infotainment system 226, in one embodiment, may eliminate the need for authentication transceiver 306. In some embodiments, processor 302 may store transmission characteristics directly within the memory of vehicle infotainment system 226. In other embodiments, processor 306 stores data within non-transitory storage medium 304.

Referring now to FIG. 3C, detailed block diagram 303 is shown to include many of the components of FIG. 3A. Schematic diagram 303 is another possible embodiment of the system of the present invention, and is shown to differ from detailed block diagram 300 by the inclusion of display 218 within user interface elements 202. Display 218 may be a single LED indicator. Display 218 may be a graphical display. In some embodiments, display 218 may be a touchscreen which accepts user input. In some embodiments, display 218 may accept input from buttons 204-208.

Referring now to FIG. 4, a flow chart of a method of controlling a remote system using a device for mounting to a vehicle and for sending a transmission to a remote system is illustrated according to an exemplary embodiment. In one embodiment, the trainable transceiver 102 has determined one of: a predetermined period of time has passed, input from a button has been received, input from a motion sensor has been received, input from a light sensor has been received (step 400).

In response to determining one of the above criteria, the trainable transceiver 102 searches for a paired and authenticated device (step 402). This step may include the authentication transceiver 306 broadcasting a signal requesting response from communications enabled devices within operating distance. In other embodiments, the trainable transceiver 102 may listen for signals from communications enabled device within operating distance without broadcasting a request. For example, trainable transceiver 102 could enter a listening mode. Other modes and/or methods of searching for a paired and authenticated device may be used in alternative embodiments.

Upon receiving a response from a second user-owned device 114, trainable transceiver 102 confirms that a paired and authenticated device has been found (step 404). For example, trainable transceiver 102 may receive a signal which is parsed by the channel detector 214 for a particular signal characteristic, which is then passed to the authenticator 308, which confirms that the signal characteristic is stored within memory 304.

In some embodiments, trainable transceiver 102 transmits a challenge for authentication to wireless device 102. The challenge can include a request for a challenge response. The request can indicate a key or code that the challenge response is expected to match or conform to. The trainable transceiver 102 can then receive the challenge response, and process the challenge response to determine if the wireless device 114 is authenticated. In various embodiments, the challenge-based authentication process can occur additionally or alternatively to other authentication processes, such as parsing a signal for a signal characteristic as described above.

Upon confirming that a paired and authenticated device has been found, trainable transceiver 102 awaits input from the user (step 406). For example, trainable transceiver 102 may enter a listening mode in which it is receptive to all signals from communications enabled devices.

The channel selection is received at trainable transceiver 102 (step 408). For example, trainable transceiver 102 may receive an input through the authentication transceiver 306 through a communications protocol such as Bluetooth. Other transceivers and/or communications protocols may be used in alternative embodiments (e.g., WiFi, cellular communications standards, etc.). In another embodiment, a command may be received at trainable transceiver 102 directly from a user input device coupled to authenticate device 114.

In response to the channel selection input, the trainable transceiver 102 confirms that the input is authenticated and paired with the previously confirmed to be authenticated device 114 (step 410). For example, a signal characteristic of the input such as a marker embedded in the content may be analyzed by the authenticator to match a stored signal characteristic in memory 304. The signal characteristic would be associated only with the selected input, and the selected input would be associated only with the authenticated device (i.e., paired with the device). Other signal characteristics may be used in alternative embodiments (e.g., frequency, amplitude, etc.).

Upon confirming that the input channel is authenticated and paired with the authenticated device 114, trainable transceiver 102 transmits the control message associated with the selected channel (step 412). For example, a certain frequency may be associated with each channel, and would be transmitted upon authentication. Other types of control messages may be used in alternative embodiments (e.g., computer-readable instructions, etc.).

Referring now to FIG. 5, a flow chart of a method of training a device for mounting to a vehicle and for sending a transmission to a remote system is illustrated according to an exemplary embodiment. In one embodiment, trainable transceiver 102 receives an input from the user interface 102 which is associated with the initiation of the training process (step 500). For example, a certain combination of buttons may be associated with the initiation of the training process. Other forms of input may be used in alternative embodiments (e.g., a button is held for a certain amount of time, a switch is activated, etc.).

In response to receiving input associated with the initiation of the training process, trainable transceiver 102 waits for further user input (step 502). For example, trainable transceiver 102 could enter a listening mode. Other modes and/or methods of waiting for user input may be used in alternative embodiments.

The selection from the user is received by trainable transceiver 102 (step 504). In one embodiment, the selection is a channel frequency at which the trainable transceiver may be configured to broadcast. In other embodiments, the selection is a channel associated with a plurality of features.

In response to receiving the selection, the trainable transceiver 102 stores the transmission details and associates them with the selected input (step 506). In one embodiment, the details are stored within a non-transitory computer-readable storage medium which may be an embodiment of memory 304.

The trainable transceiver 102 broadcasts an invitation to pair with the selected input (step 508). In one embodiment, the invitation is a Bluetooth invitation. Other communications protocols may be used in alternative embodiments (e.g., WiFi, cellular communications standards, etc.).

Once the invitation to pair has been broadcast, the trainable transceiver 102 waits for the invitation to be accepted by a communications enabled device (step 510). In one embodiment, the trainable transceiver 102 may actively listen until a signal is received. In other embodiments, the trainable transceiver 102 may listen for predetermined intervals of time.

In response to the invitation being accepted by a communications enabled device, trainable transceiver 102 stores the communications enabled device (or an indicator thereof) in memory and associates it with the selected input (step 512). In one embodiment, the device is stored within a non- transitory computer-readable storage medium which may be an embodiment of memory 304.

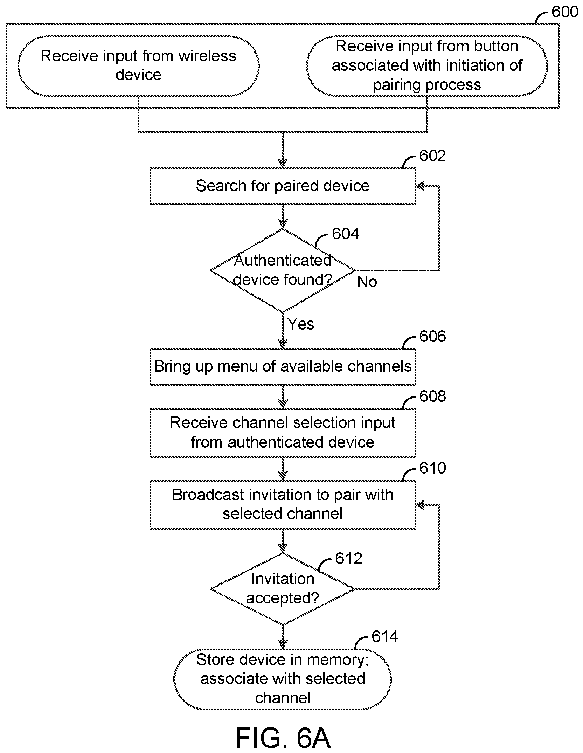

Referring now to FIG. 6A, a flow chart of a method of training a device for mounting to a vehicle and for sending a transmission to a remote system when at least one device has been previously authenticated is illustrated according to an exemplary embodiment. In one embodiment, trainable transceiver 102 receives one of: input from a wireless device; input from the user interface 102 which is associated with the initiation of the training process (step 600).

In response to receiving input associated with the initiation of the training process, trainable transceiver 102 searches for a paired and authenticated device (step 602). This step may include the authentication transceiver 306 broadcasting a signal requesting response from communications enabled devices within operating distance. In other embodiments, the trainable transceiver 102 may listen for signals from communications enabled device within operating distance without broadcasting a request. For example, trainable transceiver 102 could enter a listening mode. Other modes and/or methods of searching for a paired and authenticated device may be used in alternative embodiments.

A user owned device within operating range is confirmed to be paired and authenticated (step 604). For example, a mobile phone with Bluetooth capabilities is within the operating range of the Bluetooth module. Other devices and forms of confirmation may be used in alternative embodiments (e.g., encrypted key, device identification number, etc.).

Upon confirmation of a paired and authenticated device, the trainable transceiver 102 brings up a menu of available channels (step 606). For example, the menu may appear on a display coupled to the user owned device. In another embodiment, the menu may not have a visual component, and may instead be read aloud. Other forms of enumerating options available may be used in alternative embodiments (e.g. vibrations, lights, etc.). The menu may include selections causing training of the trainable transceiver 102 (e.g., simplified training which may occur automatically in response to the selection, may occur without further user actions or instructions received at the user interface, may occur with a limited set of functionality or a limited set of further user actions or instructions received at the user interface). The menu may include selections causing a wireless updating of firmware of the trainable transceiver 102. The menu may include selections causing coupling (e.g., associating, corresponding) of a user interface element coupled to the wireless device with execution of a command, such that when the user interface element is activated or selected, the trainable transceiver 102 can execute the command. The menu may include selections causing configuration of a process associated with operation of the trainable transceiver 102. For example, the configuration of the process may include adjusting a command associated with a channel.

The selection of channel is received by trainable transceiver 102 (step 608). For example, the selection could be a certain frequency associated with opening a specific garage door. Other selections and/or corresponding actions taken may be used in alternative embodiments (e.g., actions such as paying a toll, turning on a home security system, etc.).

The trainable transceiver 102 broadcasts an invitation to pair with the selected input (step 610). For example, a Bluetooth invitation may be broadcast as a message to be displayed on a Bluetooth-enabled wireless device. In one embodiment, trainable transceiver 102 may broadcast invitations continuously. In another embodiment, trainable transceiver 102 may broadcast invitations at predetermined intervals. Other devices and/or communications protocols may be used in alternative embodiments (e.g., devices such as a laptop, smartwatch, fob, etc.; protocols such as WiFi, cellular communications standards, etc.).

Once the invitation to pair has been broadcast, the trainable transceiver 102 waits for the invitation to be accepted by a communications enabled device (step 612). In one embodiment, trainable transceiver 102 enters a listening mode and actively listens until a response is received. In another embodiment, trainable transceiver 102 may listen for predetermined intervals. In one embodiment, the communications enabled device could be a mobile phone with Bluetooth capability. Other devices and/or communications protocols may be used in alternative embodiments (e.g., devices such as a laptop, smartwatch, fob, etc.; protocols such as WiFi, cellular communications standards, etc.).

In response to the invitation being accepted by a communications enabled device, trainable transceiver 102 stores the communications enabled device in memory 304 and associates it with the selected input (step 614). For example, the selected input could correspond to a specific frequency of signal to be emitted by the transmitter 216. Other characteristics of signals could be associated with the selected input in alternative embodiments (e.g., amplitude, markers, etc.).

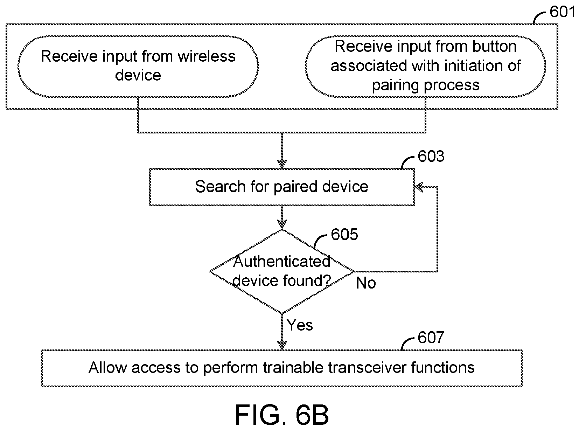

Referring now to FIG. 6B, a flow chart of a method of training a device for mounting to a vehicle and for sending a transmission to a remote system when at least one device has been previously authenticated is illustrated according to another exemplary embodiment. The method of FIG. 6B is shown to differ from the method of FIG. 6A in the acceptance of input from a limited array of options, in some embodiments from buttons 204-208. In one embodiment, trainable transceiver 102 receives one of: input from a wireless device; input from the user interface 102 which is associated with the initiation of the training process (step 601).

In response to receiving input associated with the initiation of the training process, trainable transceiver 102 searches for a paired and authenticated device (step 603). This step may include the authentication transceiver 306 broadcasting a signal requesting response from communications enabled devices within operating distance. In other embodiments, the trainable transceiver 102 may listen for signals from communications enabled device within operating distance without broadcasting a request. For example, trainable transceiver 102 could enter a listening mode. Other modes and/or methods of searching for a paired and authenticated device may be used in alternative embodiments.

A user owned device within operating range is confirmed to be paired and authenticated (step 605). For example, a mobile phone with Bluetooth capabilities is within the operating range of the Bluetooth module. Other devices and forms of confirmation may be used in alternative embodiments (e.g., encrypted key, device identification number, etc.).

Upon confirmation of a paired and authenticated device, the trainable transceiver 102 allows a user access to give commands to trainable transceiver 102 to perform trainable transceiver functions (step 607). For example, the user may enter commands through the use of buttons 204-208 to select one of a subset of pre-programmed options available. It is contemplated that any number of methods through which a user may enter commands could be used in step 607.

The construction and arrangement of the systems and methods as shown in the various exemplary embodiments are illustrative only. Although only a few embodiments have been described in detail in this disclosure, many modifications are possible (e.g., variations in sizes, dimensions, structures, shapes and proportions of the various elements, values of parameters, mounting arrangements, use of materials, colors, orientations, etc.). For example, the position of elements may be reversed or otherwise varied and the nature or number of discrete elements or positions may be altered or varied. Accordingly, all such modifications are intended to be included within the scope of the present disclosure. The order or sequence of any process or method steps may be varied or re-sequenced according to alternative embodiments. Other substitutions, modifications, changes, and omissions may be made in the design, operating conditions and arrangement of the exemplary embodiments without departing from the scope of the present disclosure.

The present disclosure contemplates methods, systems and program products on any machine-readable media for accomplishing various operations. The embodiments of the present disclosure may be implemented using existing computer processors, or by a special purpose computer processor for an appropriate system, incorporated for this or another purpose, or by a hardwired system. Embodiments within the scope of the present disclosure include program products comprising machine-readable media for carrying or having machine-executable instructions or data structures stored thereon. Such machine-readable media can be any available media that can be accessed by a general purpose or special purpose computer or other machine with a processor. By way of example, such machine-readable media can comprise RAM, ROM, EPROM, EEPROM, CD-ROM or other optical disk storage, magnetic disk storage or other magnetic storage devices, or any other medium which can be used to carry or store desired program code in the form of machine-executable instructions or data structures and which can be accessed by a general purpose or special purpose computer or other machine with a processor. When information is transferred or provided over a network or another communications connection (either hardwired, wireless, or a combination of hardwired or wireless) to a machine, the machine properly views the connection as a machine-readable medium. Thus, any such connection is properly termed a machine-readable medium. Combinations of the above are also included within the scope of machine-readable media. Machine-executable instructions include, for example, instructions and data which cause a general purpose computer, special purpose computer, or special purpose processing machines to perform a certain function or group of functions.

Although the figures show a specific order of method steps, the order of the steps may differ from what is depicted. Two or more steps may be performed concurrently or with partial concurrence. Such variation will depend on the software and hardware systems chosen and on designer choice. All such variations are within the scope of the disclosure. Likewise, software implementations could be accomplished with standard programming techniques with rule based logic and other logic to accomplish the various connection steps, processing steps, comparison steps and decision steps.

## Claims

1. A trainable transceiver (102) for communicating with a remote electronic system (112), comprising:
a user interface configured to receive an input of a command associated with operating the remote electronic system (112); and
a processing circuit configured to determine a presence of a portable electronic device (114) by:
receiving a signal from the portable electronic device (114), and
authenticating the portable electronic device (114) by confirming that a particular signal characteristic of the signal of the portable electronic device is stored in a non-transitory computer-readable medium of the trainable transceiver; and
wherein the processing circuit is further configured to execute the command to operate the remote electronic system upon authenticating the portable electronic device.

2. The trainable transceiver (102) of claim 1, wherein the processing circuit is configured to determine the presence of the portable electronic device (114) using short-range wireless communication with the portable electronic device.

3. The trainable transceiver (102) of claim 1, wherein the processing circuit is configured to determine the presence of the portable electronic device (114) by communicating with the portable electronic device (114) through a vehicle bus.

4. The trainable transceiver (102) of claim 1, wherein the processing circuit is further configured to:
determine a transmitting channel associated with the command; and
confirm that the portable electronic device (114) is associated with the transmitting channel.

5. The trainable transceiver (102) of claim 1, wherein the processing circuit is further configured to:
cause a display to display a menu comprising a set of available selections; and
receive, via a user interface, a selection that is an available selection contained within the menu.

6. The trainable transceiver (102) of claim 5, wherein the processing circuit is further configured to:
determine that at least a second device has been paired with at least a second selection; and
confirm a presence of the second device.

7. The trainable transceiver (102) of claim 5, wherein the display is coupled to the portable electronic device.

8. The trainable transceiver (102) of claim 5, wherein the user interface is coupled to the portable electronic device.

9. The trainable transceiver (102) of claim 5, wherein the menu further comprises selections causing simplified training of a trainable transceiver comprising the processing circuit.

10. The trainable transceiver (102) of claim 5, wherein the menu further comprises selections causing wireless updating of firmware of a trainable transceiver comprising the processing circuit.

11. The trainable transceiver (102) of claim 5, wherein the menu further comprises selections causing coupling of a user interface element coupled to the portable electronic device with execution of the command.

12. The trainable transceiver (102) of claim 5, wherein the menu further comprises selections causing configuration of a process associated with operation of a trainable transceiver comprising the processing circuit.

13. The trainable transceiver (102) of claim 12, wherein the configuration of a process associated with operation of the trainable transceiver comprises adjusting a command associated with a channel.

14. The trainable transceiver (102) of claim 5, wherein the processing circuit is further configured to:
store, in the non-transitory computer-readable storage medium, a plurality of permissions associated with the user's device,
wherein the set of available selections is determined based upon the plurality of permissions associated with the user's device.

15. A method for a trainable transceiver (102) for communicating with a remote electronic system (112), the method comprising:
receiving, at a user interface of the trainable transceiver (102), an input of a command associated with operating the remote electronic system (112);
determining, by a processing circuit of the trainable transceiver, a presence of a portable electronic device (114) by:
receiving a signal from the portable electronic device (114), and
authenticating the portable electronic device (114) by confirming that a particular signal characteristic of the signal of the portable electronic device is stored in a non-transitory computer-readable medium of the trainable transceiver; and
executing the command to operate the remote electronic system upon authenticating the portable electronic device (114).

## Patentansprüche

1. Ein trainierbarer Sende-Empfänger (102) zum Kommunizieren mit einem entfernten elektronischen System (112), der Folgendes umfasst:
eine Benutzerschnittstelle, die dazu konfiguriert ist, eine Eingabe eines Befehls zu empfangen, der dem Betrieb des entfernten elektronischen Systems (112) zugeordnet ist; und
eine Verarbeitungsschaltung, die dazu konfiguriert ist, das Vorhandensein einer tragbaren elektronischen Vorrichtung (114) festzustellen, durch das:
Empfangen eines Signals von der tragbaren elektronischen Vorrichtung (114), und das
Authentifizieren der tragbaren elektronischen Vorrichtung (114) durch Bestätigung, dass eine bestimmte Signaleigenschaft des Signals der tragbaren elektronischen Vorrichtung auf einem nicht flüchtigen computerlesbaren Medium des trainierbaren Sende-Empfängers gespeichert ist; und
wobei die Verarbeitungsschaltung ferner dazu konfiguriert ist, den Befehl zum Betrieb des entfernten elektronischen Systems bei der Authentifizierung der tragbaren elektronischen Vorrichtung auszuführen.

2. Der trainierbare Sende-Empfänger (102) nach Anspruch 1, wobei die Verarbeitungsschaltung dazu konfiguriert ist, das Vorhandensein der tragbaren elektronischen Vorrichtung (114) zu bestimmen unter Verwendung einer drahtlosen Kurzstrecken-Kommunikation mit der tragbaren elektronischen Vorrichtung.

3. Der trainierbare Sende-Empfänger (102) nach Anspruch 1, wobei die Verarbeitungsschaltung dazu konfiguriert ist, das Vorhandensein der tragbaren elektronischen Vorrichtung (114) zu bestimmen, indem sie mit der tragbaren elektronischen Vorrichtung (114) über einen Fahrzeugbus kommuniziert.

4. Der trainierbare Sende-Empfänger (102) nach Anspruch 1, wobei die Verarbeitungsschaltung ferner dazu konfiguriert ist, Folgendes zu bewerkstelligen:
Bestimmen eines Übertragungskanals, der dem Befehl zugeordnet ist; und
Bestätigen, dass die tragbare elektronische Vorrichtung (114) mit dem Übertragungskanal verbunden ist.

5. Der trainierbare Sende-Empfänger (102) nach Anspruch 1, wobei die Verarbeitungsschaltung ferner konfiguriert ist, um Folgendes zu bewerkstelligen:
Bewirken, dass eine Anzeige ein Menü anzeigt, das einen Satz verfügbarer Selektionen umfasst; und
Erhalten, über eine Benutzerschnittstelle, einer Selektion, die eine im Menü enthaltene verfügbare Selektion ist.

6. Der trainierbare Sende-Empfänger (102) nach Anspruch 5, wobei die Verarbeitungsschaltung ferner konfiguriert ist, um Folgendes zu bewerkstelligen:
Bestimmen, dass mindestens eine zweite Vorrichtung mit mindestens einer zweiten Selektion gepaart (*paired*) wurde; und
Bestätigen des Vorhandenseins der zweiten Vorrichtung.

7. Der trainierbare Sende-Empfänger (102) nach Anspruch 5, wobei die Anzeige mit der tragbaren elektronischen Vorrichtung gekoppelt ist.

8. Der trainierbare Sende-Empfänger (102) nach Anspruch 5, wobei die Benutzerschnittstelle mit der tragbaren elektronischen Vorrichtung gekoppelt ist.

9. Der trainierbare Sende-Empfänger (102) nach Anspruch 5, wobei das Menü ferner Selektionen umfasst, die ein vereinfachtes Training eines trainierbaren Sende-Empfängers bewirken, der die Verarbeitungsschaltung umfasst.

10. Der trainierbare Sende-Empfänger (102) nach Anspruch 5, wobei das Menü ferner Selektionen umfasst, die eine drahtlose Aktualisierung der Firmware eines trainierbaren Sende-Empfängers bewirken, der die Verarbeitungsschaltung umfasst.

11. Der trainierbare Sende-Empfänger (102) nach Anspruch 5, wobei das Menü ferner Selektionen umfasst, die eine Kopplung eines an die tragbare elektronische Vorrichtung gekoppelten Benutzerschnittstellenelements mit der Ausführung des Befehls bewirken.

12. Der trainierbare Sende-Empfänger (102) nach Anspruch 5, wobei das Menü ferner Selektionen umfasst, die eine Konfiguration eines Prozesses bewirken, der dem Betrieb eines trainierbaren Sende-Empfängers zugeordnet ist, der die Verarbeitungsschaltung umfasst.

13. Der trainierbare Sende-Empfänger (102) nach Anspruch 12, wobei die Konfiguration eines Prozesses, der dem Betrieb eines trainierbaren Sende-Empfängers zugeordnet ist, das Einstellen eines einem Kanal zugeordneten Befehls umfasst.

14. Der trainierbare Sende-Empfänger (102) nach Anspruch 5, wobei die Verarbeitungsschaltung weiter konfiguriert ist, um Folgendes zu bewerkstelligen:
Speichern, im nicht flüchtigen computerlesbaren Speichermedium, einer Vielzahl von Berechtigungen, die der Vorrichtung des Benutzers zugeordnet sind,
wobei die Menge der verfügbaren Selektionen auf der Grundlage der Vielzahl von Berechtigungen bestimmt wird, die der Vorrichtung des Benutzers zugeordnet sind.

15. Ein Verfahren für einen trainierbaren Sende-Empfänger (102) zur Kommunikation mit einem entfernten elektronischen System (112), wobei das Verfahren Folgendes umfasst:
Empfangen, an einer Benutzerschnittstelle des trainierbaren Sende-Empfängers (102), einer Eingabe eines Befehls, der dem Betrieb des entfernten elektronischen Systems (112) zugeordnet ist;
Bestimmen, durch eine Verarbeitungsschaltung des trainierbaren Sende-Empfängers, eines Vorhandenseins einer tragbaren elektronischen Vorrichtung (114) durch:
Empfangen eines Signals ausgehend von der tragbaren elektronischen Vorrichtung (114), und
Authentifizieren der tragbaren elektronischen Vorrichtung (114) durch Bestätigung, dass eine bestimmte Signaleigenschaft des Signals der tragbaren elektronischen Vorrichtung, in einem nicht flüchtigen computerlesbaren Medium des trainierbaren Sende-Empfängers gespeichert ist; und durch
Ausführen des Befehls zum Betrieb des entfernten elektronischen Systems bei erfolgter Authentifizierung des tragbaren elektronischen Geräts (114).

## Revendications

1. Un émetteur-récepteur (102) capable d'apprentissage pour communiquer avec un système électronique distant (112), comprenant :
une interface utilisateur configurée pour recevoir une entrée d'une commande associée au fonctionnement du système électronique distant (112) ; et
un circuit de traitement configuré pour déterminer la présence d'un dispositif électronique portable (114) par le fait de :
recevoir un signal de la part du dispositif électronique portable (114), et de
authentifier le dispositif électronique portable (114) en confirmant qu'une caractéristique de signal spécifique du signal du dispositif électronique portable est stockée sur un support non transitoire lisible par ordinateur de l'émetteur-récepteur capable d'apprentissage ; et
sachant que le circuit de traitement est en outre configuré pour exécuter la commande pour faire fonctionner le système électronique distant après authentification du dispositif électronique portable.

2. L'émetteur-récepteur capable d'apprentissage (102) d'après la revendication 1, sachant que le circuit de traitement est configuré pour déterminer la présence du dispositif électronique portable (114) en utilisant une communication sans fil à courte portée avec le dispositif électronique portable.

3. L'émetteur-récepteur capable d'apprentissage (102) d'après la revendication 1, sachant que le circuit de traitement est configuré pour déterminer la présence du dispositif électronique portable (114) en communiquant avec le dispositif électronique portable (114) par l'intermédiaire d'un bus de véhicule.

4. L'émetteur-récepteur capable d'apprentissage (102) d'après la revendication 1, sachant que le circuit de traitement est en outre configuré pour :
déterminer un canal de transmission associé à la commande ; et pour
confirmer que le dispositif électronique portable (114) est associé au canal de transmission.

5. L'émetteur-récepteur (102) capable d'apprentissage d'après la revendication 1, sachant que le circuit de traitement est en outre configuré pour :
amener un écran à afficher un menu comprenant un ensemble de sélections disponibles ; et
recevoir, via une interface utilisateur, une sélection qui est une sélection disponible contenue dans le menu.

6. L'émetteur-récepteur (102) d'après la revendication 5, sachant que le circuit de traitement est en outre configuré pour :
déterminer qu'au moins un deuxième dispositif a été jumelé avec au moins une deuxième sélection ; et
confirmer la présence du deuxième dispositif.

7. L'émetteur-récepteur (102) d'après la revendication 5, sachant que l'affichage est couplé au dispositif électronique portable.

8. L'émetteur-récepteur capable d'apprentissage (102) d'après la revendication 5, sachant que l'interface utilisateur est couplée au dispositif électronique portable.

9. L'émetteur-récepteur capable d'apprentissage (102) d'après la revendication 5, sachant que le menu comprend en outre des sélections entraînant un apprentissage simplifié d'un émetteur-récepteur capable d'apprentissage comprenant le circuit de traitement.

10. L'émetteur-récepteur capable d'apprentissage (102) d'après la revendication 5, sachant que le menu comprend en outre des sélections entraînant une mise à jour sans fil d'un *firmware* d'un émetteur-récepteur capable d'apprentissage comprenant le circuit de traitement.

11. L'émetteur-récepteur capable d'apprentissage (102) d'après la revendication 5, sachant que le menu comprend en outre des sélections entraînant le couplage d'un élément d'interface utilisateur couplé au dispositif électronique portable, avec l'exécution de la commande.

12. L'émetteur-récepteur capable d'apprentissage (102) d'après la revendication 5, sachant que le menu comprend en outre des sélections entraînant la configuration d'un processus associé au fonctionnement d'un émetteur-récepteur capable d'apprentissage comprenant le circuit de traitement.

13. L'émetteur-récepteur capable d'apprentissage (102) d'après la revendication 12, sachant que la configuration d'un processus associé au fonctionnement de l'émetteur-récepteur capable d'apprentissage comprend l'ajustage d'une commande associée à un canal.

14. L'émetteur-récepteur capable d'apprentissage (102) d'après la revendication 5, sachant que le circuit de traitement est en outre configuré pour :
stocker, dans le support de stockage non transitoire lisible par ordinateur, une pluralité d'autorisations associées au dispositif de l'utilisateur,
sachant que l'ensemble des sélections disponibles est déterminé en fonction de la pluralité des autorisations associées au dispositif de l'utilisateur.

15. Un procédé pour un émetteur-récepteur capable d'apprentissage (102) pour communiquer avec un système électronique distant (112), le procédé comprenant le fait de :
recevoir, au niveau d'une interface utilisateur de l'émetteur-récepteur capable d'apprentissage (102), une entrée d'une commande associée au fonctionnement du système électronique distant (112) ;
déterminer, par un circuit de traitement de l'émetteur-récepteur capable d'apprentissage, une présence d'un dispositif électronique portable (114) par le fait de :
recevoir un signal de la part du dispositif électronique portable (114), et de
authentifier le dispositif électronique portable (114) en confirmant qu'une caractéristique de signal spécifique du signal du dispositif électronique portable est stockée sur un support non transitoire lisible par ordinateur de l'émetteur-récepteur capable d'apprentissage ; et de
exécuter la commande pour faire fonctionner le système électronique distant après authentification du dispositif électronique portable (114).
